# EUROPÄISCHE PATENTSCHRIFT

(11) **EP 1 464 874 B1**
(45) Veröffentlichungstag und Bekanntmachung des Hinweises auf die Patenterteilung: **28.12.2005**
(21) Anmeldenummer: 04003201.3
(22) Anmeldetag: 12.02.2004
(51) Int. Cl.: F16H 55/17, B22F 5/08

(54) **Verfahren zur Herstellung eines Gangrades**
Method for producing a gear wheel for speed change gears
Procédé de fabrication d'une roue dentée pour engrenage de changement de vitesse

(30) Priorität: 04.04.2003 DE 10315665
(43) Veröffentlichungstag der Anmeldung: 06.10.2004
(73) Patentinhaber: Polymer-Chemie GmbH, 55566 Bad-Sobernheim (DE)
(72) Erfinder: Hauf, Gerald, 55218 Ingelheim (DE)
(74) Vertreter: Grünecker, Kinkeldey, Stockmair & Schwanhäusser Anwaltssozietät

(56) Entgegenhaltungen:
- EP-A- 0 563 949
- WO-A-01/08838
- DE-A- 2 929 267
- US-A- 3 678 557

## Beschreibung

Die vorliegende Erfindung betrifft ein Verfahren zur Herstellung eines Gangrades mit einer Laufverzahnung und einer Synchronverzahnung, bei dem ein die Synchronverzahnung ausbildender Ring separat mittels eines pulvermetallurgischen Verfahrens vorbereitet und mit einem die Laufverzahnung aufweisenden Gangradbasisteil verbunden wird.

Gangräder in manuellen Schaltgetrieben sitzen frei drehbar gelagert auf der Hauptwelle und kämmen mit ihrer Laufverzahnung mit einer entsprechend ausgebildeten Gegenverzahnung eines fest auf der Vorlegewelle sitzenden Gegenrades. Jedes Gangrad stellt durch Anzahl der Zähne mit seinem Gegenrad eine bestimmte Übersetzungsstufe, d.h. einen "Gang" dar. Der Gang wird eingelegt, indem eine Schiebemuffe über die Synchronverzahnung des Gangrades geschoben wird, dadurch das Gangrad mit der Welle fest verbunden wird und somit das Drehmoment auf die Welle übertragen werden kann.

Gangräder werden üblicherweise aus geschmiedeten Rohlingen hergestellt. Die Herstellung der Synchronverzahnung von Gangrädern ist aufwendig, da diese in zwei Richtungen eine verjüngte Form besitzen, nämlich eine Hinterlegung mit einer dieser vorgelagerten Abdachung. Sofern der Durchmesser des die Synchronverzahnung ausbildenden Ringes kleiner als derjenige des Gangradbasisteils ist, befindet sich die Abdachung an der freien Stirnseite der Synchronverzahnung und die Hinterlegung an der dem Gangradbasisteil zugewandten Seite des Ringes.

Ein Verfahren zur separaten Herstellung zunächst eines Gangradbasisteils und eines die Synchronverzahnung ausbildenden Ringes ist beispielsweise aus der EP-0 563 949 A1 bekannt. Bei diesem vorbekannten Stand der Technik wird der separate Ring zunächst als Ringrohling durch Sinterschmieden vorbereitet und später auf das Gangradbasisteil aufgesetzt. Die Verbindung zwischen dem Gangradbasisteil und dem schmiedegesinterten Ring erfolgt über Schrumpfverbindung. Bei dem aus dem Stand der Technik bekannten Verfahren kann zwar durch entsprechende Materialauswahl den unterschiedlichen Anforderungen an die Synchronverzahnung einerseits und das Gangradbasisteil andererseits Rechnung getragen werden. Das bekannte Verfahren ist jedoch im Hinblick auf die Verminderung erforderlicher Fertigungsschritte unzureichend, da die Kontur der Synchronverzahnung durch Sinterschmieden nicht mit der gewünschten Genauigkeit und in Endkontur hergestellt werden kann.

Ein dem vorerwähnten Verfahren in etwa gleichwertiges Verfahren ist aus der US-3,678,557 bekannt. Bei diesem vorbekannten Verfahren wird das Gangradbasisteil durch ein Schmiedeteil gebildet, auf welches ein mittels Sintern oder Pulverschmieden ausgeformter und die Synchronverzahnung ausbildender Ring aufgebracht wird. Beide Teile werden mittels Laserschweißen miteinander verbunden. Ein entsprechender Lösungsvorschlag ist der ebenfalls ein Verfahren zur Herstellung eines Gangrades mit einer Laufverzahnung und einer Synchronverzahnung betreffenden DE 29 29 267 bekannt.

Bei den aus dem Stand der Technik bekannten Verfahren zur Herstellung eines Gangrades ist es erforderlich, die Synchronverzahnung an dem mittels Pulvermetallurgie hergestellten Ring nachzubearbeiten. Im übrigen ist es bei den aus der DE 29 29 267 und der US-3,678,557 vorbekannten Verfahren erforderlich, den mittels Pulvermetallurgie hergestellten Ring in einem separaten Verfahrensschritt mit dem Gangradbasisteil zu fügen. Zwar lehrt die EP-0 563 949, dass beim Fügen der beiden Bauteile durch Aufschrumpfen die Restwärme des Ringes nach dem Sintern genutzt werden kann. Das gesinterte Bauteil wird dementsprechend unmittelbar nach dem Sintern und im heißen Zustand auf einen Fügesitz des Gangradbasisteils aufgeschoben und schrumpft dort bei Abkühlung auf. Die Verfahrensführung macht jedoch eine genaue Temperaturkontrolle und eine temperaturmäßig vorgegebene Überführung des gesinterten Bauteils zu dem Gangradbasisteil erforderlich. Auch müssen besondere vorrichtungsmäßige Maßnahmen ergriffen werden, um den heißen gesinterten Ring von dem Sinterofen zu dem Gangradbasisteil zu verbringen.

Der vorliegenden Erfindung liegt das Problem zugrunde, ein Verfahren zur einfacheren Herstellung eines Gangrades anzugeben, bei dem auf eine Nachbearbeitung der an dem Ring ausgebildeten Synchronverzahnung verzichtet werden kann.

Zur Lösung des obigen Problems wird mit der vorliegenden Erfindung ein Verfahren mit den Merkmalen von Anspruch 1 angegeben, welches sich dadurch vom gattungsbildenden Stand der Technik unterscheidet, dass ein eine Synchronverzahnung mit Hinterlegung und Abdachung an seinem Umfang aufweisender Grünling durch Einspritzen einer fließfähigen Suspension, die das Metallpulver zur pulvermetallurgischen Herstellung des Ringes enthält, in ein Spritzgießwerkzeug ausgeformt wird. Erfindungsgemäß befindet sich die zwischen der Abdachung und der Hinterlegung der Synchronverzahnung ausgebildete Trennkante bei der spritzgießtechnischen Herstellung des Grünlings in der Trennebene des Spritzgießwerkzeuges. In einem nachfolgenden Verfahrensschritt wird der in dem Grünling enthaltene Binder jedenfalls teilweise entfernt und der so erzeugte Bräunling wird gesintert und auf diese Weise zu dem die Synchronverzahnung in Endkontur aufweisenden Ring kompaktiert, der mit dem Gangradbasisteil verbunden wird.

Das erfindungsgemäße Verfahren bedient sich zur endkonturfertigen Herstellung der Synchronverzahnung des Ringes des pulvermetallurgischen Spritzgusses. Hierbei kommt ein Spritzgießwerkzeug zum Einsatz, welches derart ausgestaltet ist, dass die zwischen der Hinterlegung und der Abdachung ausgebildete Trennkante der Synchronverzahnung in der Trennebene des Werkzeuges befindlich ist. Das Spritzgießwerkzeug bildet dementsprechend vorzugsweise das Formnest für ein ringförmiges Bauteil, welches an seiner Außenumfangsfläche die Synchronverzahnung aufweist, wobei die Abdachung ausschließlich in einer Hälfte des Spritzgießwerkzeuges und die Hinterlegung ausschließlich in der anderen Werkzeughälfte der Spritzgießform ausgebildet wird. Diese Verfahrensführung erlaubt die endkonturfertige Ausformung der Synchronverzahnung an dem Grünling des Ringes. Durch Entbindern und Sintern wird diese lediglich verdichtet, was auch an der Außenumfangsfläche und damit im Bereich der Synchronverzahnung zu einer Schrumpfung der Abmessungen führt, nicht aber zu einer Veränderung der geometrischen Verhältnisse. Die Synchronverzahnung ist am Ende der pulvermetallurgischen Herstellung des Ringes vollständig und in Endkontur ausgeformt. Eine Nachbearbeitung der Synchronverzahnung ist nicht erforderlich.

Gemäß einer bevorzugten Weiterbildung der vorliegenden Erfindung, bei der der Ring mittels Sintern mit dem Gangradbasisteil gefügt wird, werden die beiden aus dem Stand der Technik bekannten separaten Verfahrensschritte in einem einzigen Verfahrensschritt kombiniert. In diesem einen Verfahrensschritt wird der Bräunling durch Sintern zu dem fertigen Sinterteil verdichtet und hierbei gleichzeitig durch Diffusion eine stoffschlüssige Verbindung zwischen dem Ring und dem Gangradbasisteil hergestellt. Es ergibt sich eine weitere fertigungstechnische Vereinfachung des Herstellungsverfahrens. Alternativ zu der stoffschlüssigen Verbindung kann die Drehmomentübertragen zwischen dem Gangradbasisteil und dem gesinterten Ring auch durch Formschluss sichergestellt werden. Dazu kann beispielsweise eine Rändelung oder eine einfache Verzahnung auf dem Fügedurchmesser des Gangradbasisteils aufgebracht werden. Im Sinterprozess formt der zu sinternde Ring die Kontur ab und somit wird eine formschlüssige Verbindung erreicht. Weiterhin ist es natürlich möglich, sowohl Gangradbasisteil als auch den die Synchronverzahnung tragenden Ring mit einer entsprechenden, gegenseitig passenden Verzahnung zu versehen.

Gemäß der bevorzugten Weiterbildung nach Anspruch 3, bei welcher die Laufverzahnung vor dem Sinterfügen fertig fräsbearbeitet wird und das Sinterfügen in einer aufkohlenden Atmosphäre durchgeführt wird, kann auf ein separates Einsatzhärten des Gangradbasisteils verzichtet werden. Denn bei dieser Verfahrensführung wird die beim Sintern zum Einsatz kommende Prozesswärme zu Diffusionsvorgängen genutzt, mit denen in der Atmosphäre enthaltener Kohlenstoff zumindest die Oberfläche der Laufradverzahnung wie auch die Oberfläche der Synchronverzahnung aufkohlt und damit härtet.

Im Hinblick auf eine möglichst exakte Verbindung und zur Vermeidung von Verwerfungen beim Sintern des Bräunlings ist es zu bevorzugen, an dem Gangradbasisteil durch Drehen einen Fügesitz auszubilden, auf den der zu sinternde Ring aufgeschoben wird. Durch die Drehbearbeitung wird die zunächst relativ grobe Oberfläche des geschmiedeten Gangradbasisteils im Hinblick auf die möglichst lagegenaue Positionierung des Ringes und eine möglichst gute stoffschlüssige Verbindung zwischen dem Ring und dem Gangradbasisteil beim Sinterfügen vorbereitet. Sofern die an dem Gangrad ausgebildete Laufverzahnung beim Sinterfügen einsatzgehärtet wird empfiehlt es sich, sämtliche Schritte zur Drehbearbeitung des Gangradbasisteils durchzuführen, bevor dieses mit dem Ring verbunden wird. Bei einer solchen Verfahrensführung müssen lediglich Hartfein-Bearbeitungsschritte im Anschluss an das Sintern und Einsatzhärten des Gangradbasisteiles durchgeführt werden, um dieses für den Einbau in ein Getriebe vorzubereiten. Bei der Hartfeinbearbeitung des Gangrades werden hier insbesondere ein Lagersitz an der Innenumfangsfläche des Gangrades sowie ein vorzugsweise einteilig an dem Schmiedeteil ausgeformter Reibkegel geschliffen bzw. gehohnt. Sofern der Durchmesser der Laufverzahnung größer ist als der Durchmesser der Synchronverzahnung, kann die Hartfeinbearbeitung der Laufverzahnung entsprechend dem Stand der Technik beispielsweise durch Schleifen hergestellt werden. Sofern jedoch der Durchmesser der Synchronverzahnung größer ist als der Durchmesser der Laufverzahnung, ist aufgrund der erforderlichen Werkzeugausläufe, eine solche Hartfeinbearbeitung nicht möglich. Allerdings kann in diesen Fällen die Hartfeinbearbeitung der Laufverzahnung durch Rollen ausgeführt werden.

Der die Synchronverzahnung tragende Ring schrumpft im Sinterprozess um bis zu 20%. Dieser Schrumpf stellt sich insbesondere beim Sinterfügen ein, d.h. beim Aufsintern des Ringes auf einen durch Schmieden, vorzugsweise mit nachfolgender Drehbearbeiten an dem Gangradbasisteil ausgebildet Fügesitz. Der Fügedurchmesser des die Synchronverzahnung tragenden Ringes ist typischer Weise mit minimalem Übermaß gegenüber dem Fügedurchmesser des Gangradbasisteils ausgelegt. Allerdings kann es zur Vermeidung von Rissen im gesinterten, die Synchronverzahnung tragenden Ring auch vorteilhaft sein, den Durchmesser des die Synchronverzahnung tragenden Ringes 5% bis 10% größer auszulegen, als den Fügedurchmesser des Gangradbasisteils. Bei größeren Durchmesserverhältnissen zwischen dem Außendurchmesser des Fügesitzes und dem Innendurchmesser des Grünlings zeigen sich mitunter Risse beim Sinterfügen. Bei größeren Durchmesserverhältnissen wird das vollständige Ansintern im Bereich der Fügesitzfläche erschwert und Koaxialität zwischen dem Ring und dem Gangradbasisteil kann nicht gewährleistet werden.

Praktische Versuche haben gezeigt, dass durch ein beim Sinterfügen flächig an dem Bräunling anliegende Formhaltestück, welches den Bräunling flächig gegen eine an dem Gangradbasisteil ausgebildete Gegenfläche drückt, Verwerfungen des Bräunlings bei der Kompaktierung zu einem gesinterten Ring vermieden werden können. Das Formhaltestück ist dabei vorzugsweise ringförmig ausgebildet und zwar aus einem Material, wie beispielsweise Molybdän, welches bei den wirksamen Sinterbedingungen nicht an dem Gangradbasisteil und/oder dem Ring ansintert.

Zweckmäßigerweise erfolgt das Andrücken des Formhaltestücks allein aufgrund der Schwerkraft. Das Formhaltestück kann hierbei gewichtsmäßig so ausgelegt werden, dass die strukturelle Integrität des Bräunlings bei Auflegen des Formhaltestücks nicht beeinträchtigt wird, wohl aber ohne aufwendige Kontrolle eines Anpressdruckes und zuverlässig auf der gesamten stirnseitigen Ringfläche des Ringes ein hinreichender Flächendruck erzeugt wird, der ein Aufwölben beim Sintern des Bräunlings verhindert.

Weitere bevorzugte Ausgestaltungen des erfindungsgemäßen Verfahrens sind in den Ansprüchen 8 und 9 angegeben.

Die vorliegende Erfindung wird nachfolgend unter Bezugnahme auf die Zeichnung näher erläutert. In dieser zeigen:
- Figur 1: eine Längsschnittansicht eines Ausführungsbeispiels eines mit dem Verfahren hergestellten Gangrades; und
- Figur 2: eine Schnittansicht entlang der Linie II-II gemäß der Darstellung in Figur 1.

Das in der Zeichnung dargestellte Ausführungsbeispiel eines Gangrades weist ein Gangradbasisteil 1 und einen Ring 2 auf. Das Gangradbasisteil 1 hat eine Laufverzahnung 1 a, die mit einer Gegenverzahnung eines hier nicht dargestellten Gegenrades eines Getriebes kämmt. Das Gangradbasisteil 1 weist ferner eine zylindrische Ausnehmung 1 b auf, welche eine Innenumfangsfläche bildet, an der sich ein Wälzlager zur Lagerung des Gangrades auf einer Hauptwelle abstützen kann.

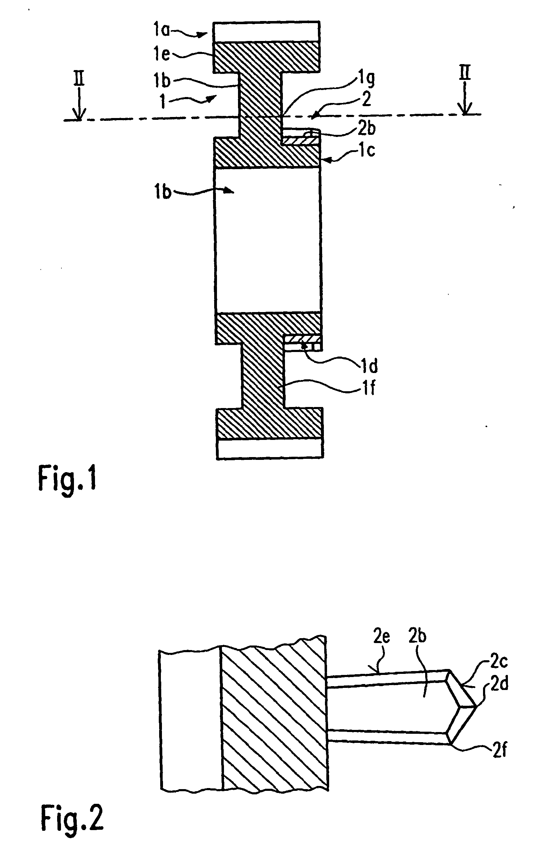

Der Ring 2 weist eine Synchronverzahnung 2a mit in radialer Richtung nach außen spitz laufenden Zähnen 2b auf, deren geometrische Ausgestaltung in der Draufsicht der Figur 2 zu entnehmen ist. Jeder Zahn 2b weist eine zu der freien Stirnseite des Zahnes 2b weisende Abdachung 2c auf, die sich von einer vorderen Spitze 2d in Richtung auf das Gangradbasisteil 1 verbreitert. Von der freien Stirnseite des Ringes 2 aus dahinter liegend befindet sich eine Hinterlegung 2e, durch welche die Grundfläche des Zahnes 2b in Richtung auf das Gangradbasisteil 1 konisch zulaufend verkleinert wird. Zwischen der Abdachung 2c und der Hinterlegung 2e befindet sich eine Trennkante 2f.

Die innere Umfangsfläche des Ringes 2 liegt gegen einen an dem Gangradbasisteil 1 ausgebildeten Fügesitz 1d an. Das Gangradbasisteil 1 weist ferner zwischen dem zylindrischen Flansch 1c und einem verbreiterten Ringabschnitt 1e einen Scheibenabschnitt 1f auf, an dem eine sich unmittelbar an den zylindrischen Flansch 1c anschließende Gegenfläche 1 g ausgeformt ist, an welcher der Ring 2 stirnseitig anliegt.

Bei der Herstellung des in den Figuren 1 und 2 gezeigten Ausführungsbeispiels werden folgende Verfahrensschritte durchlaufen: Zunächst wird das Gangradbasisteil 1 sowie der Ring 2 als separate Bauteile vorbereitet. Hierzu wird zunächst das Gangradbasisteil 1 geschmiedet, vorzugsweise gesenkgeschmiedet. Bei diesem Formgebungsvorgang wird der zylindrische Flansch 1c sowie der Scheibenabschnitt 1f und der Ringabschnitt 1e ausgeformt. Auch wird die wesentliche Kontur des Fügesitzes 1d durch Umformen hergestellt sowie hier nicht dargestellte und sich zwischen dem Scheibenabschnitt 1f und den jeweiligen Stirnseiten des Flansches 1c an dessen Außenumfangsfläche ausgeformte Reibkegel. In einem nachfolgenden Drehbearbeitungsschritt wird der Fügesitz 1d überdreht. Danach wird an der Außenumfangsfläche des Ringabschnittes 1e die Laufverzahnung 1 a durch Fräsen ausgebildet.

Zur Herstellung des Ringes 2 wird zunächst ein fließfähiger Feedstock bestehend aus einem einsatzhärtbaren Pulver und einem Binder, vorzugsweise einem Thermoplasten durch Mischen beider Komponenten hergestellt. Dieser Feedstock wird zu Granulat verarbeitet und in einer Spritzgießmaschine aufgeschmolzen. Das der Spritzgießmaschine zugeordnete Werkzeug hat ein die Endkontur des Ringes 2 wiedergebendes Formnest, die in Bezug auf die Trennebene des Spritzgießwerkzeuges derart ausgebildet ist, dass sich die Trennkante 2f in der Trennebene des Spritzgießwerkzeuges befindet. Mit anderen Worten wird die Abdachung in einer Spritzgießhälfte und die Hinterlegung in der anderen Spritzgießhälfte abgeformt.

Der in der Spritzgießform geformte und dort erstarrte Grünling wird in an sich bekannter Weise entnommen und einem Entbinderungsprozess unterzogen. Der Binder kann aus dem Grünling chemisch, thermisch oder in anderer geeigneter Weise zumindest teilweise entfernt werden.

Der so vorbereitete Bräunling wird nun auf den Fügesitz 1d aufgeschoben. Der Bräunling des Ringes weist zu diesem Zeitpunkt eine Innenumfangsfläche auf, die größer als die Außenumfangsfläche des Fügesitzes 1d ist. Üblicher Weise hat der Fügesitz 1d einen Außendurchmesser mit einem minimal geringerem Maß als der Innendurchmesser des ringförmigen Grünlings. Vorzugsweise wurde das Gangradbasisteil, insbesondere im Bereich der Gegenfläche 1g vor dem Aufbringen des Bräunlings sorgfältig gereinigt insbesondere entfettet und auf diejenige Stirnseite gelegt, welche auf der dem Fügesitz 1d gegenüberliegenden Seite des Scheibenabschnittes 1f befindlich ist.

Danach wird das Bauteil in einen Sinterofen geschoben, in dem der Bräunling des Ringes zu einem gesinterten Ring verdichtet wird. Bei dem sich hierbei ergebenden Schrumpf legt sich die Innenumfangsfläche des Ringes zunächst an den Fügesitz 1d an. Der Ring wird aufgrund der Verdichtung des Pulvers beim Sintern und Anlage an den Fügesitz 1d zentriert. Bei fortschreitendem Sintern erfolgt eine Diffusionsverbindung zwischen dem Fügesitz 1d und dem Ring 2, so dass der Ring 2 und das Gangradbasisteil 1 am Ende des Sinterns sintergefügt sind. Mit anderen Worten sind beide Bauteile 1, 2 stoffschlüssig miteinander verbunden. Alternativ ist auch, wie zuvor beschrieben, eine formschlüssige Verbindung möglich. Ferner wird während des Sinterns ein kohlenstoffhaltiges Gas in den Sinterofen eingeleitet, durch welches jedenfalls auch die Laufverzahnung 1 a sowie die Synchronverzahnung 2a aufgekohlt und damit einsatzgehärtet wird.

Das so hergestellte Bauteil wird vorzugsweise unmittelbar im Anschluss an das Sintern abgeschreckt. Danach wird durch Schleifen oder Hohnen die Innenumfangsfläche des zylindrischen Flansches 1c zu einem Lagersitz ausgeformt. Eine derartige Hartfeinbearbeitung wird auch an den hier nicht dargestellten Reibkegeln, die an dem zylindrischen Flansch 1c ausgeformt sind, vorgenommen. Je nach Zugänglichkeit aufgrund des Synchronverzahnungsdurchmessers wird die Laufverzahnung durch Schleifen (bei gegebener Zugänglichkeit) oder durch Rollen (bei Synchronverzahnungsdurchmesser größer Laufverzahnungsdurchmesser) hartfeinbearbeitet.

### Bezugszeichenliste

- 1: Gangradbasisteil
- 1a: Außenverzahnung
- 1b: zylindrische Ausnehmung
- 1c: zylindrischer Flansch
- 1d: Fügesitz
- 1e: Ringabschnitt
- 1f: Schreibenabschnitt
- 1g: Gegenfläche
- 2: Ring
- 2a: Synchronverzahnung
- 2b: Zahn
- 2c: Abdachung
- 2d: Spitze
- 2e: Hinterlegung
- 2f: Trennkante

## Patentansprüche

1. Verfahren zur Herstellung eines Gangrades mit einer Laufverzahnung (1a) und einer Synchronverzahnung (2a), bei dem ein die Synchronverzahnung (2a) ausbildender Ring (2) separat mittels eines pulvermetallurgischen Verfahrens vorbereitet und mit einem Gangradbasisteil (1) verbunden wird,
**dadurch gekennzeichnet,**
**dass** ein die Synchronverzahnung (2a) an seinem Umfang aufweisender Grünling durch Einspritzen einer fließfähigen, das Metallpulver zur pulvermetallurgischen Herstellung des Ringes (2) enthaltenden Suspension in einem Spritzgießwerkzeug derart ausgeformt wird, dass eine zwischen der Hinterlegung (2e) und der Abdachung (2c) der Synchronverzahnung (2a) ausgebildete Trennkante (2f) in der Trennebene des Spritzgießwerkzeugs liegt,
**dass** in dem Grünling enthaltener Binder jedenfalls teilweise entfernt wird und
**dass** der so erzeugte Bräunling zu dem die Synchronverzahnung (2a) in Endkontur umfassenden Ring (2) gesintert wird.

2. Verfahren nach Anspruch 1 oder 2, **dadurch gekennzeichnet, dass** vor dem Verbinden des Ringes (2) mit dem Gangradbasisteil (1) die Laufverzahnung ausgebildet wird.

3. Verfahren nach einem der vorherigen Ansprüche, **dadurch gekennzeichnet, dass** der Ring (2) mittels Sintern mit dem Gangradbasisteil (1) gefügt wird.

4. Verfahren nach einem der vorherigen Ansprüche, **dadurch gekennzeichnet, dass** die Verzahnung des Gangradbasisteils (1) vor dem Sinterfügen fertig fräsbearbeitet wird.

5. Verfahren nach Anspruch 4, **dadurch gekennzeichnet, dass** das Sinterfügen in einer aufkohlenden Atmosphäre durchgeführt wird.

6. Verfahren nach einem der vorherigen Ansprüche, **dadurch gekennzeichnet, dass** an dem Gangradbasisteil (1) ein Fügesitz (1d) für den Ring (2) drehbearbeitet wird, auf den Bräunling aufgeschoben wird.

7. Verfahren nach einem der Ansprüche 3 bis 6, **dadurch gekennzeichnet, dass** der Laufdurchmesser des Fügesitzes (1 d) 5% bis 10% kleiner als der Innendurchmesser des Grünlings ist.

8. Verfahren nach einem der Ansprüche 3 bis 7, **dadurch gekennzeichnet, dass** der Bräunling beim Sinterfügen durch ein flächig an dem Bräunling anliegendes Formhaltestück flächig gegen eine an dem Gangradbasisteil (1) ausgebildete Gegenfläche gedrückt wird.

9. Verfahren nach Anspruch 8, **dadurch gekennzeichnet, dass** das Formhaltestück durch seine Gewichtskraft in axialer Richtung gegen den Bräunling drückt.

10. Verfahren nach einem der vorherigen Ansprüche, **dadurch gekennzeichnet, dass** das Metallpulver aus einem einsatzhärtenden Material ausgewählt ist.

11. Verfahren nach einem der Ansprüche 1, 2 oder 6 bis 10, bei dem der Ring (2) mit einem kleineren Durchmesser als die Laufverzahnung (1a) ausgebildet wird, **dadurch gekennzeichnet, dass** das Gangradbasisteil (1) geschmiedet wird und an dem so gewonnenen Schmiedeteil der Fügesitz (1d) drehbearbeitet wird und nach dem Fügen des Ringes (2) die Innenumfangs- und Stirnseiten des Gangradbasisteils (1) drehbearbeitet werden.

12. Verfahren nach einem der Ansprüche 1 bis 9, bei dem der Ring (2) mit einem größeren Durchmesser als die Laufverzahnung (1a) ausgebildet wird, **dadurch gekennzeichnet, dass** die Hartfeinbearbeitung der Laufverzahnung durch Rollen erfolgt.

## Claims

1. Method of producing a gear wheel with gear teeth (1a) and synchromesh teeth (2a), whereby a ring (2) incorporating the synchromesh teeth (2a) is prepared separately by means of a powder metallurgy process and joined to a gear base part (1),
**characterised in that**
a green compact incorporating the synchromesh teeth (2a) at its periphery is formed by injecting a freely flowing suspension containing the metal powder needed for the process to produce the ring (2) by powder metallurgy into an injection mould in such a way that a dividing edge' (2f) between the flank (2e) and the top land (2c) of the synchromesh teeth (2a) lies in the dividing plane of the injection mould,
some of the binder contained in the green compact is removed in any event and
the resultant brown compact is sintered to obtain the ring (2) incorporating the synchromesh teeth (2a) with the final contour.

2. Method as claimed in claim 1 or 2, **characterised in that** the gear teeth are formed before joining the ring (2) to the gear base part (1).

3. Method as claimed in one of the preceding claims, **characterised in that** the ring (2) is joined to the gear base part (1) by sintering.

4. Method as claimed in one of the preceding claims, **characterised in that** the teeth of the gear base part (1) are milled to a finished state prior to the sinter-joining process.

5. Method as claimed in claim 4, **characterised in that** the sinter-joining process is conducted in a carburizing atmosphere.

6. Method as claimed in one of the preceding claims, **characterised in that** a joint seat (1d) for the ring (2) is machined by lathe on the gear base part (1), onto which the brown compact is pushed.

7. Method as claimed in one of claims 3 to 6, **characterised in that** the gear diameter of the joint seat (1d) is 5% to 10% smaller than the internal diameter of the green compact.

8. Method as claimed in one of claims 3 to 7, **characterised in that**, during sinter joining, the brown compact is pressed flat against a complementary surface formed on the gear base part (1) by means of a mould retaining piece lying flat against the brown compact.

9. Method as claimed in claim 8, **characterised in that** the mould retaining piece presses against the brown compact in the axial direction due to the force of its weight.

10. Method as claimed in one of the preceding claims, **characterised in that** the metal powder is selected from a material which can be case-hardened.

11. Method as claimed in one of claims 1, 2 or 6 to 10, in which the ring (2) has a smaller diameter than the gear teeth (1a), **characterised in that** the gear base part (1) is forged and the joint seat (1d) is machined by lathe on the resultant forged part and the inner peripheral faces and end faces of the gear base part (1) are machined by lathe after joining the ring (2).

12. Method as claimed in one of claims 1 to 9, in which the ring (2) has a bigger diameter than the gear teeth (1a), **characterised in that** the hard machining of the gear teeth is effected by rolling.

## Revendications

1. Procédé pour fabriquer une roue dentée pour engrenage de changement de vitesse avec une denture de roulement (1a) et une denture de synchronisation (2a), selon lequel une bague (2) formant la denture de synchronisation (2a) est préparée séparément à l'aide d'un procédé de métallurgie des poudres et est reliée à un élément de base de roue dentée (1),
**caractérisé en ce qu'**une première ébauche présentant la denture de synchronisation (2a) sur sa périphérie est formée grâce à l'injection dans un outil de moulage par injection d'une suspension fluide contenant la poudre de métal destinée à la fabrication, à l'aide d'un procédé de métallurgie des poudres, de la bague (2), de telle sorte qu'un bord de séparation (2f) formé entre la partie arrière (2e) et la déclivité (2c) de la denture de synchronisation (2a) se trouve dans le plan de séparation de l'outil de moule à injection,
**en ce que** le liant contenu dans la première ébauche est dans tous les cas partiellement éliminé,
et **en ce que** la seconde ébauche ainsi produite est frittée pour donner la bague (2) dont le contour définitif présente la denture de synchronisation (2a).

2. Procédé selon la revendication 1 ou 2, **caractérisé en ce qu'**avant la liaison de la bague (2) avec l'élément de base de roue dentée (1), la denture de roulement est formée.

3. Procédé selon l'une des revendications précédentes, **caractérisé en ce que** la bague (2) est reliée à l'élément de base de roue dentée (1) par frittage.

4. Procédé selon l'une des revendications précédentes, **caractérisé en ce que** la denture de l'élément de base de roue dentée (1) est soumise à un fraisage de finition avant l'assemblage par frittage.

5. Procédé selon la revendication 4, **caractérisé en ce que** l'assemblage par frittage est effectué dans une atmosphère carburée.

6. Procédé selon l'une des revendications précédentes, **caractérisé en ce que** sur l'élément de base de roue dentée (1), on usine par tournage un logement d'assemblage (1d) pour la bague (2), sur lequel la seconde ébauche est enfilée.

7. Procédé selon l'une des revendications 3 à 6, **caractérisé en ce que** le diamètre de roulement du logement d'assemblage (1d) est inférieur de 5 % à 10 % au diamètre intérieur de la première ébauche.

8. Procédé selon l'une des revendications 3 à 7, **caractérisé en ce que** la seconde ébauche, lors de l'assemblage par frittage, est pressée par une pièce de maintien de forme appliquée à plat contre elle contre une surface opposée formée sur l'élément de base de roue dentée (1).

9. Procédé selon la revendication 8, **caractérisé en ce que** la pièce de maintien de forme est pressée par gravité dans le sens axial contre la seconde ébauche.

10. Procédé selon l'une des revendications précédentes, **caractérisé en ce que** la poudre de métal est choisie à partir d'une matière durcissant par cémentation.

11. Procédé selon l'une des revendications 1, 2 ou 6 à 10, selon lequel la bague (2) est formée avec un plus petit diamètre que la denture de roulement (1a), **caractérisé en ce que** l'élément de base de roue dentée (1) est formé par forgeage, et sur la pièce forgée ainsi obtenue, le logement d'assemblage (1d) est usiné par tournage et après l'assemblage de la bague (2), le côté périphérique intérieur et les côtés frontaux de l'élément de base (1) sont usinés par tournage.

12. Procédé selon l'une des revendications 1 à 9, selon lequel la bague (2) est formée avec un plus grand diamètre que la denture de roulement (1a), **caractérisé en ce que** le finissage de matière dure de la denture de roulement se fait par roulage.
